# EUROPEAN PATENT APPLICATION

(11) **EP 3 646 963 A1**
(43) Date of publication of application: **06.05.2020**
(21) Application number: 18823560.0
(22) Date of filing: 29.05.2018
(51) Int. Cl.: B21D 39/04, B21D 39/20

(54) **MEMBER BONDING METHOD AND BONDED BODY**

(30) Priority: 27.06.2017 JP 2017124725; 12.01.2018 JP 2018003044
(71) Applicant: Kabushiki Kaisha Kobe Seiko Sho (Kobe Steel, Ltd.), Kobe-shi, Hyogo 651-8585 (JP)
(72) Inventor: MAEDA, Yasuhiro, Kobe-shi, Hyogo 651-2271 (JP); WATANABE, Kenichi, Kobe-shi, Hyogo 651-2271 (JP); KIMURA, Takayuki, Kobe-shi, Hyogo 651-2271 (JP)
(74) Representative: TBK
(86) International application number: PCT/JP2018/020543
(87) International publication number: WO 2019/003764

(57) **Abstract**

In a method for joining members, a first tube 10, and a second tube 20 capable of being inserted into the first tube 10 are prepared. The second tube is inserted in a tube hole of the first tube in an axial direction of the first tube 10. The second tube 20 is radially expanded toward the first tube 10 so that the first tube 10 and the second tube 20 are joined by press-fitting. The first tube 10 is made of a material having a spring back amount larger than a spring back amount of the second tube 20.

## Description

### TECHNICAL FIELD

The present invention relates to a method for joining members and a joined body.

### BACKGROUND ART

A low-specific-gravity and high-strength metal called a high-tension steel is used in order to reduce a weight of a vehicle and improve safety. The high-tension steel is effective in reducing the weight and improving the safety, but is heavier than the low-specific-gravity material such as aluminum. When the high-tension steel is used, the high strength causes problems such as a decrease in moldability, an increase in molding load, and a decrease in dimensional accuracy. In order to solve these problems, in recent years, multi-materials are used in which extruded products, cast products, and press-molded products using aluminum having a specific gravity lower than steel are used together with steel components.

The problem of the use of the multi-materials is the joining of dissimilar metals such as steel components and aluminum components. In general, it is difficult to join dissimilar metals having different properties as described above. For example, Patent Document 1 and Patent Document 2 disclose a member joining method of joining dissimilar metals in the use of the multi-materials by using an elastic body. Specifically, in the member joining method of Patent Document 1 and Patent Document 2, a tube is inserted into a hole of a wall surface body (plate member), and the elastic body (urethane rubber member) is inserted into the tube (tube member). The tube is deformed by pressurizing the elastic body, and thus, the tube is expanded. As a result, the wall surface body and the tube are caulk-joined.

### PRIOR ART DOCUMENT

### PATENT DOCUMENT

Patent Document 1: JP S51-133170 A
Patent Document 2: JP H09-192760 A

### SUMMARY OF THE INVENTION

### PROBLEMS TO BE SOLVED BY THE INVENTION

In the methods for joining members of Patent Document 1 and Patent Document 2, the materials of the members to be joined have not been examined in detail, and there is room for improving joining strength by examining the materials. The joining of the tubes has not been examined in detail. In particular, the joining of the tubes is difficult to improve the joining strength in terms of difficulties in processing and handling compared to the joining of the wall surface body and the tube.

An object of the present invention is to improve joining strength in a method for joining members and a joined body.

### MEANS FOR SOLVING THE PROBLEMS

A method for joining members of the present invention includes preparing a first tube and a second tube capable of being inserted to a tube hole of the first tube in an axial direction of the first tube, inserting the second tube into the first tube, and radially expanding the second tube toward the first tube, thereby joining the first tube and the second tube by press-fitting. The first tube is made of a material having a spring back amount larger than a spring back amount of the second tube.

According to this method, the spring back amount of the outer first tube is larger than the spring back amount of the inner second tube, and thus, the first tube strongly tightens the second tube. As a result, it is possible to improve joining strength. Since the joining due to the expansion does not give a thermal strain to the members compared to the joining due to welding, it is possible to ensure high dimensional accuracy. Here, the spring back amount means a restoration amount when the material is deformed, and the deformation thereof may be plastic deformation or elastic deformation.

The expanding may include inserting an elastic body into the second tube, and radially expanding the elastic body outward of the second tube by compressing the elastic body in a longitudinal direction of the second tube, thereby expanding the second tube toward the first tube.

According to this method, since the first tube and the second tube can be evenly expanded by the elastic body, it is possible to reduce a local load on the first tube and the second tube, and it is possible to prevent local deformation. Accordingly, fitting accuracy between the first tube and the second tube is improved, and thus, it is possible to improve the joining strength. Compared to an expansion method of performing electromagnetic molding or other processing, it is possible to easily perform the expansion method using the elastic body, and it is possible to arbitrarily select the materials of the members to be joined.

A tensile strength of a material of the first tube may be equal to or greater than a tensile strength of a material of the second tube. Young's modulus of a material of the first tube may be equal to or less than Young's modulus of a material of the second tube.

According to this method, it is possible to define the materials of the first tube and the second tube by mechanical engineering material characteristics, specifically. In particular, since the tensile strength and Young's modulus are factors that greatly affect the spring back amount, the tensile strength and Young's modulus are significant in selecting the materials in terms of the spring back amounts.

The method for joining members may further include preparing a third tube that allows insertion of the first tube, inserting the first tube and the second tube into the third tube, and expanding the second tube toward the first tube and the third tube, thereby joining the first tube, the second tube, and the third tube by press-fitting. The third tube, the first tube, and the second tube may be made of materials having larger spring back amounts in this order.

According to this method, three tubes can be joined by press-fitting simultaneously with high strength. Specifically, since the third tube, the first tube, and the second tube are made of materials having large spring back amounts, the members made of the materials having larger spring back amounts are disposed in order from the outside to the inside. Accordingly, since the spring back amount of the outer third tube is the largest, the third tube strongly tightens the first tube and the second tube. As described above, since the spring back amount of the intermediate first tube is larger than the spring back amount of the inner second tube, the first tube strongly tightens the second tube. Therefore, the three tubes are joined by press-fitting through firm tightening, and high-strength joining by press-fitting is realized.

A joined body of the present invention is a joined body in which a second tube is expanded to be joined to a first tube in a state in which the second tube is inserted into a tube hole of the first tube in an axial direction of the first tube. The first tube is made of a material having a spring back amount larger than a spring back amount of the second tube.

According to this configuration, in the joined body, high-strength joining is realized as described above in terms of the spring back amount.

### EFFECT OF THE INVENTION

According to the present invention, in a method for joining members of joining two or more tubes by expanding the tubes, and a joined body, it is possible to improve joining strength by defining materials of the tubes by spring back amounts.

### BRIEF DESCRIPTION OF THE DRAWINGS

Fig. 1 is a perspective view of a steering support to which a member joining method according to a first embodiment of the present invention is applied.
Fig. 2 is a partial cross-sectional view before a first tube and a second tube of the first embodiment are joined.
Fig. 3 is a partial cross-sectional view while the first tube and the second tube of Fig. 2 are joined.
Fig. 4 is a partial cross-sectional view after the first tube and the second tube of Fig. 2 are joined.
Fig. 5 is a stress-strain curve representing a spring back amount in the first embodiment.
Fig. 6 is a stress-strain curve representing a spring back amount in a modification example of the first embodiment.
Fig. 7 is a partial cross-sectional view before the first tube, the second tube, and a third tube of the second embodiment are joined.
Fig. 8 is a partial cross-sectional view while the first tube, the second tube, and the third tube of Fig. 7 are joined.
Fig. 9 is a partial cross-sectional view after the first tube, the second tube, and the third tube of Fig. 7 are joined.
Fig. 10 is a stress-strain curve representing a spring back amount in a second embodiment.

### MODE FOR CARRYING OUT THE INVENTION

### (First embodiment)

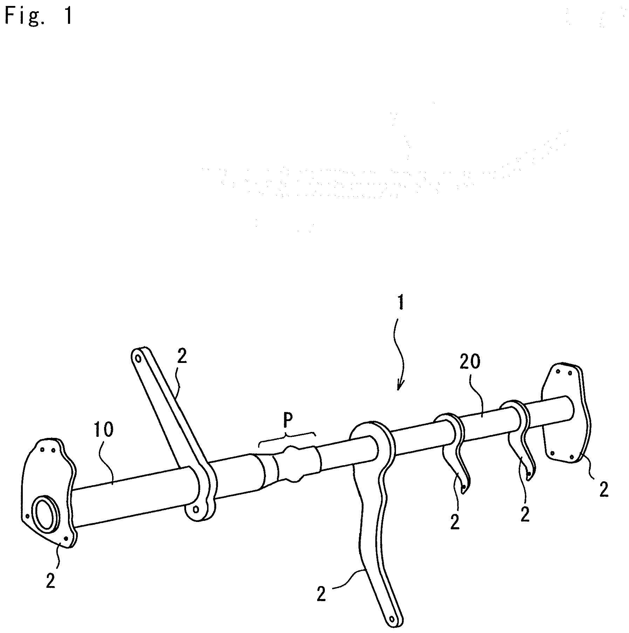

Hereinafter, embodiments of the present invention will be described with reference to the accompanying drawings. A method for joining members according to a first embodiment will be described with reference to Figs. 1 to 5. As illustrated in Fig. 1, the method for joining members according to the present embodiment may be applied to a steering support beam (joined body) 1 which is one of vehicle body frames. Specifically, a first tube 10 and a second tube 20 of the steering support beam 1 are joined by using a rubber member (elastic body) 40 by the method for joining members according to the present embodiment.

As illustrated in Fig. 1, the steering support beam 1 is configured by joining the first tube 10 and the second tube 20, which have different diameters, at a joining portion P and by joining a plurality of brackets 2 thereto. The difference in diameter between the first tube 10 and the second tube 20 is generated in terms of mechanism. In general, the first tube 10 having a large diameter is disposed on a driver seat side, and the second tube 20 having a small diameter is disposed on a passenger seat side. In Fig. 1, dimensions and shapes may differ from actual ones for the sake of clarity in description.

The first tube 10 is a circular tubular member, and is made of high-tension steel. One end of the first tube 10 is contracted, and is joined to the second tube 20 at the joining portion P. The other end of the first tube 10 is joined to the plate-shaped bracket 2. However, a shape and a material of the first tube 10 are not limited thereto, and can be arbitrarily changed without departing from the scope of the present invention.

The second tube 20 is a circular tubular member, and is made of mild steel. A cross-sectional shape perpendicular to an axial direction of the second tube 20 is substantially constant, and the second tube 20 has a size capable of being inserted into the first tube 10. One end of the second tube 20 is joined to the plate-shaped bracket 2. However, a shape and a material of the second tube 20 are not limited thereto, and can be arbitrarily changed without departing from the scope of the present invention. Various brackets 2 are joined to the second tube 20.

The brackets 2 provided at both ends of the steering support beam 1 are attached to end portions in order to fix the first tube 10 and the second tube 20 to a vehicle sidewall (not illustrated) . The other brackets 2 are attached to the first tube 10 and the second tube 20 in order to support the first tube 10 and the second tube 20. By these supporting brackets 2, the first tube 10 and the second tube 20 are mechanically connected to components of a vehicle such as a floor panel or a dashboard (not illustrated). Although not illustrated, a steering bracket for supporting a steering column serving as a rotational shaft of a steering wheel is also joined to the first tube 10. As stated above, the steering support beam 1 is a support member that is joined to various components of the vehicle, and needs to have high strength.

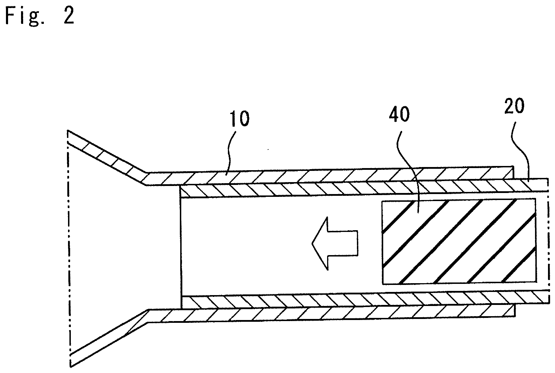

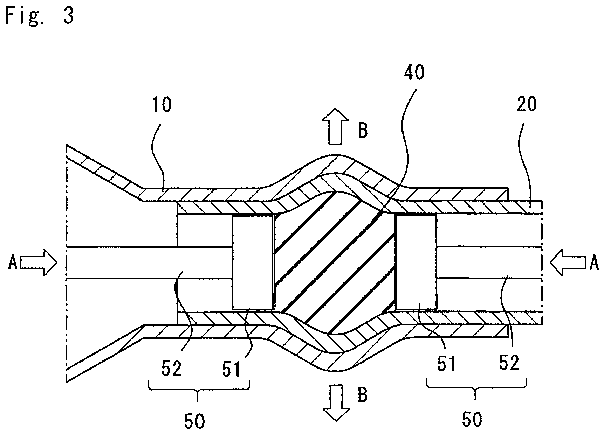

Figs. 2 and 3 are enlarged cross-sectional views of the joining portion P in Fig. 1. As illustrated in Fig. 2, in the method for joining members according to the present embodiment, the second tube 20 is initially inserted into the first tube 10. In this state, the first tube 10 and the second tube 20 are not expanded and deformed, and can move in linear motion in a tube axis direction. Next, the rubber member 40 is inserted into the second tube 20 (see an arrow in Fig. 2). However, the order of insertion is not particularly limited. That is, the rubber member 40 may be initially inserted into the second tube 20, and the second tube 20 may be inserted into the first tube 10 in this state.

The rubber member 40 is cylindrical, and has a size capable of being inserted into the second tube 20. In a cross section perpendicular to the axial direction of the second tube 20, an outer shape of the rubber member 40 is similar to an inner shape of the second tube 20, and is preferably as large as possible. Both ends of the rubber member 40 have flat surfaces perpendicular to a longitudinal direction (axial direction) of the first tube 10 and the second tube 20. For example, a material of the rubber member 40 is preferably any of a urethane rubber, a chloroprene rubber, a CNR rubber (chloroprene rubber + nitrile rubber), or a silicon rubber. The hardness of the rubber member 40 is preferably 30 or more for Shore A.

As illustrated in Fig. 3, after the rubber member 40 is disposed at the joining portion P (see Fig. 1), pushers 50 are disposed on both sides with the rubber member 40 interposed therebetween. The pusher 50 includes an indenter portion 51 which is a portion that presses the rubber member 40 and a drive rod 52 that extends from the indenter portion 51. The indenter portion 51 has a cylindrical shape, and an end surface is a flat pressing surface. The drive rod 52 is attached to a press device (not illustrated) . The drive rod is driven by the press device, and thus, the rubber member 40 is compressed in the longitudinal direction of the first tube 10 and the second tube 20 (see arrows A in Fig. 3). With this compression, the rubber member 40 is radially expanded outward of the first tube 10 and the second tube 20 (see arrows B in Fig. 3). Due to this expansion, the second tube 20 is expanded, and the first tube 10 is also expanded, and the first tube 10 and the second tube 20 are joined by press-fitting.

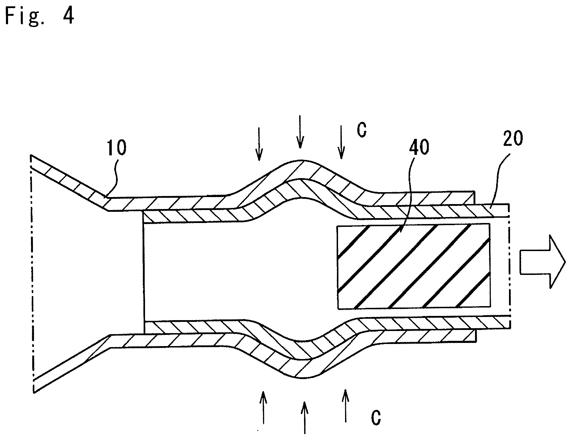

As illustrated in Fig. 4, after the expansion, a compressive force due to the pushers 50 is released by driving the press device (not illustrated). The rubber member 40 from which the compressive force is released is restored to an original shape by an elastic force. Thus, it is possible to easily detach the rubber member 40 from the second tube 20. At this time, an expansion force due to the rubber member 40 is released, and thus, a spring back phenomenon occurs in the first tube 10 and the second tube 20. That is, the first tube 10 and the second tube 20 are slightly contracted radially inward thereof (see arrows C in Fig. 4).

When the first tube 10 and the second tube 20 are compared in terms of a spring back amount, a spring back amount of the material (high-tension steel) of the first tube 10 disposed on the outside is larger than a spring back amount of the material (mild steel) of the second tube 20 disposed on the inside. Accordingly, the outer first tube 10 is contracted greater than the inner second tube 20, and the first tube 10 strongly tightens the second tube 20. As a result, the joining strength of press-fitting is further improved. Here, the spring back amount means a restoration amount when the material is deformed, and the deformation thereof may be plastic deformation or elastic deformation.

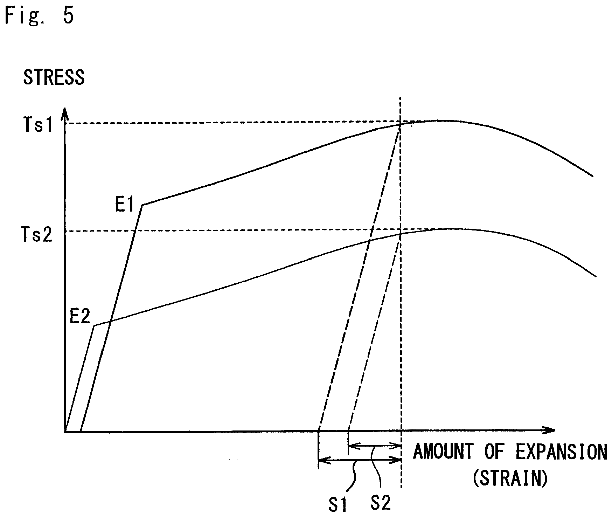

Fig. 5 is a stress-strain graph representing spring back amounts S1 and S2. A horizontal axis indicates the amount of expansion (strain), and a vertical axis indicates stress. The spring back amount S1 indicates the spring back amount of the first tube 10, and the spring back amount S2 indicates the spring back amount of the second tube 20. As represented by slopes of left straight portions in the graph, the first tube 10 (high-tension steel) and the second tube 20 (mild steel) are made of the same kind of steel-based material, and Young's modulus E1 of the first tube 10 and Young's modulus E2 of the second tube 20 are substantially the same. A tensile strength Ts1 of the first tube 10 is larger than a tensile strength Ts2 of the second tube 20. In particular, a difference between the spring back amount S1 and the spring back amount S2 in the present embodiment is mainly caused by a difference between the tensile strengths Ts1 and Ts2. A stress-strain curve of the first tube 10 does not start from an origin due to a clearance present between the first tube 10 and the second tube 20. That is, the first tube 10 starts to be expanded after the inner second tube 20 is expanded by this clearance. The spring back is schematically represented up to a position at which the stress becomes zero by a broken line in the graph. However, the stress generated between the first tube 10 and the second tube 20 is in an equilibrium state, and thus, the contraction is completed in reality. In this regard, the spring back amount S1 of the first tube 10 is larger than the spring back amount S2 of the second tube 20. Accordingly, the outer first tube 10 is contracted greater than the inner second tube 20, and thus, the first tube 10 strongly tightens the second tube 20. As a result, the joining strength of the press-fitting is further improved.

According to the present embodiment, the spring back amount of the outer first tube 10 is larger than the spring back amount of the inner second tube 20, and thus, the first tube 10 strongly tightens the second tube 20. Accordingly, it is possible to improve the joining strength. Since the joining due to the expansion does not give a thermal strain to the members compared to the joining due to welding, it is possible to ensure high dimensional accuracy.

According to the present embodiment, since the first tube 10 and the second tube 20 can be uniformly expanded by the rubber member 40, it is possible to reduce a local load on the first tube 10 and the second tube 20, and it is possible to prevent local deformation. Accordingly, fitting accuracy between the first tube 10 and the second tube 20 is improved, and thus, it is possible to improve the joining strength. Compared to an expansion method of performing electromagnetic molding or other processing, it is possible to easily perform the expansion method using the rubber member 40, and it is possible to arbitrarily select the materials of the members to be joined.

According to the present embodiment, it is possible to define the materials of the first tube 10 and the second tube 20 by the tensile strength which is specifically mechanical engineering material characteristics. In particular, since the tensile strength is a factor that greatly affects the spring back amount, the tensile strength is significant in selecting the materials in terms of the spring back amounts.

As stated above, it is possible to obtain the steering support beam 1 in which high-strength joining is realized as described above in terms of the spring back amount.

As a modification example of the present embodiment, the material of the first tube 10 may be an aluminum alloy, and the material of the second tube 20 may be high-tension steel.

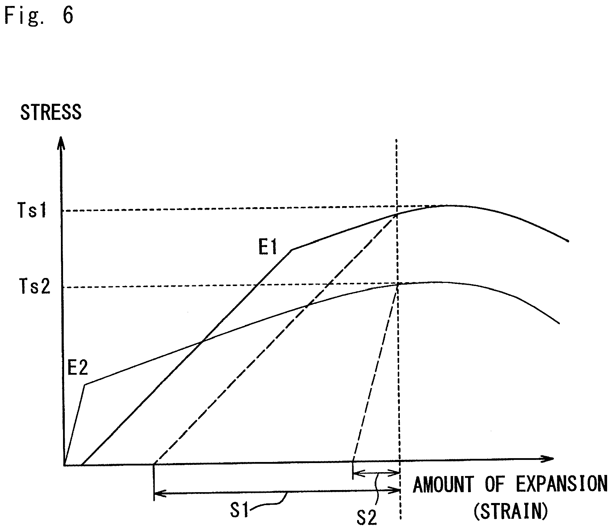

Fig. 6 is a stress-strain graph representing spring back amounts S1 and S2. A horizontal axis indicates the amount of expansion (strain), and a vertical axis indicates stress. The spring back amount S1 indicates the spring back amount of the first tube 10, and the spring back amount S2 indicates the spring back amount of the second tube 20. As represented by slopes of left straight portions in the graph, the Young's modulus E1 of the first tube 10 (aluminum alloy) is smaller than the Young' s modulus E2 of the second tube 20 (high-tension steel). A tensile strength Ts1 of the first tube 10 is larger than a tensile strength Ts2 of the second tube 20. In particular, a difference between the spring back amount S1 and the spring back amount S2 in the present embodiment is mainly caused by a difference in Young's modulus and a difference in tensile strength. The spring back is schematically represented up to a position at which the stress becomes zero by a broken line in the graph. However, the stress generated between the first tube 10 and the second tube 20 is in an equilibrium state, and thus, the contraction is completed in reality. In this regard, the spring back amount S1 of the first tube 10 is larger than the spring back amount S2 of the second tube 20. Accordingly, the outer first tube 10 is contracted greater than the inner second tube 20, and thus, the first tube 10 strongly tightens the second tube 20. As a result, the joining strength of the caulk-joining is further improved.

According to the present modification example, it is possible to define the materials of the first tube 10 and the second tube 20 by the tensile strength and Young's modulus which are specifically mechanical engineering material characteristics. In particular, since the tensile strength and Young's modulus are factors that greatly affect the spring back amount, the tensile strength and Young's modulus are significant in selecting the materials in terms of the spring back amounts.

### (Second embodiment)

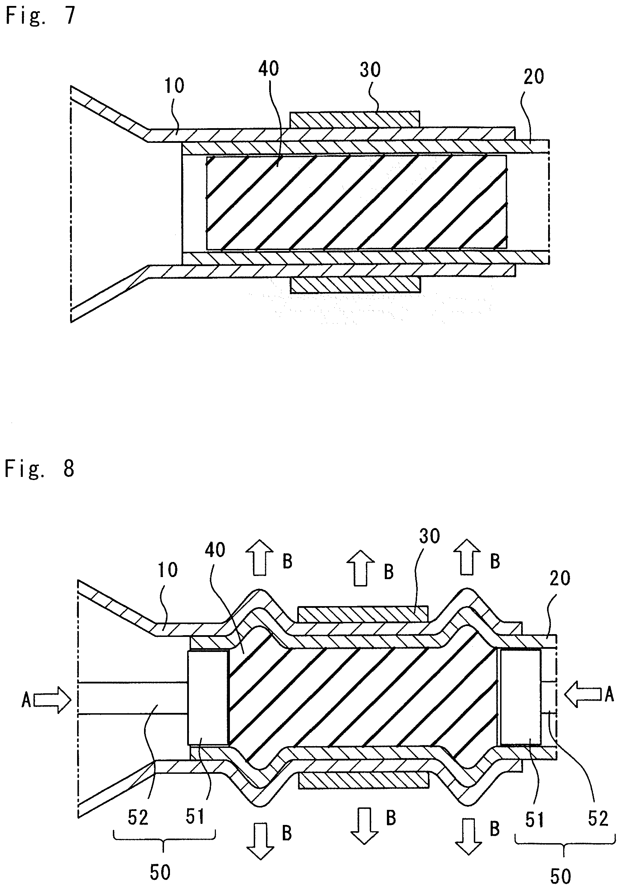

In a method for joining members according to a second embodiment illustrated in Figs. 7 to 10, the first tube 10, the second tube 20, and a third tube 30 are joined by press-fitting. This method for joining members is substantially the same as the method for joining members of the first embodiment except for the third tube 30 and the materials of the tubes 10 to 30. Therefore, the description of the same parts as those described in the first embodiment may be omitted.

The third tube 30 is a circular tubular member. The third tube 30 has a substantially constant cross-sectional shape, and has a size that allows insertion of the first tube 10. However, a shape and a material of the third tube 30 are not limited thereto, and can be arbitrarily changed without departing from the scope of the present invention.

As illustrated in Fig. 7, in the present embodiment, the third tube 30, the first tube 10, the second tube 20, and the rubber member 40 are initially arranged in order from the outside. For example, these components may be arranged such that the second tube 20 is inserted into the first tube 10 and then the first and second tubes are inserted into the third tube 30, or the first tube 10 is inserted into the third tube 30 and then the second tube 20 is inserted into the first tube 10. Furthermore, a timing at which the rubber member 40 is inserted into the second tube 20 is not particularly limited.

As illustrated in Fig. 8, after the aforementioned arrangement, the pushers 50 are arranged on both sides with the rubber member 40 interposed therebetween. The rubber member 40 is compressed in the longitudinal direction (axial direction) of the first to third tubes 10 to 30 by the two pushers 50 (see arrows A in Fig. 8). With this compression, the rubber member 40 is radially expanded outward of the first to third tubes 10 to 30 (see arrows B in Fig. 8). Due to this expansion, the first to third tubes 10 to 30 are expanded. Particularly, the first tube 10 and the second tube 20 are greatly expanded on both sides of the third tube 30, and the first to third tubes 10 to 30 are joined by press-fitting together.

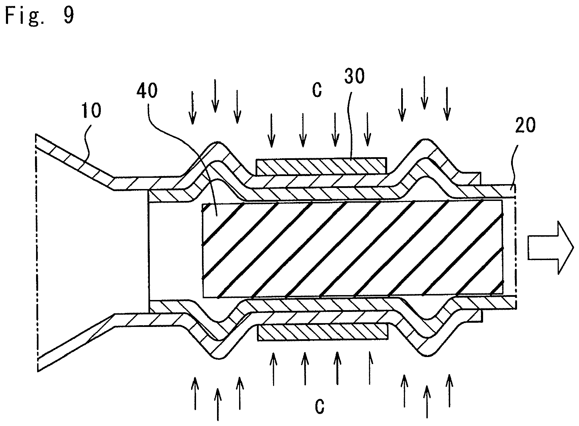

As illustrated in Fig. 9, after the expansion, the compression due to the pushers 50 is released. The rubber member 40 from which the compressive force is removed is restored to an original shape by an own elastic force. Thus, it is possible to easily detach the rubber member 40 from the second tube 20. At this time, the expansion force due to the rubber member 40 is released, and thus, the spring back phenomenon occurs in the first to third tubes 10 to 30. That is, the first to third tubes 10 to 30 are slightly contracted radially inward thereof (see arrows C in Fig. 9).

When the first to third tubes 10 to 30 are compared in terms of the spring back amount, the first to third tubes 10 to 30 are defined such that the members made of the materials having larger spring back amounts are disposed in order from the outside to the inside. Accordingly, when the expansion force due to the rubber member 40 is released, the outer third tube 30 is contracted greater than the intermediate first tube 10 and the inner second tube 20, and the intermediate first tube 10 is contracted greater than the inner second tube 20. Accordingly, the third tube 30 strongly tightens the first and second tubes 10 and 20, and the first tube 10 strongly tightens the second tube 20. As a result, the joining strength of the press-fitting is further improved.

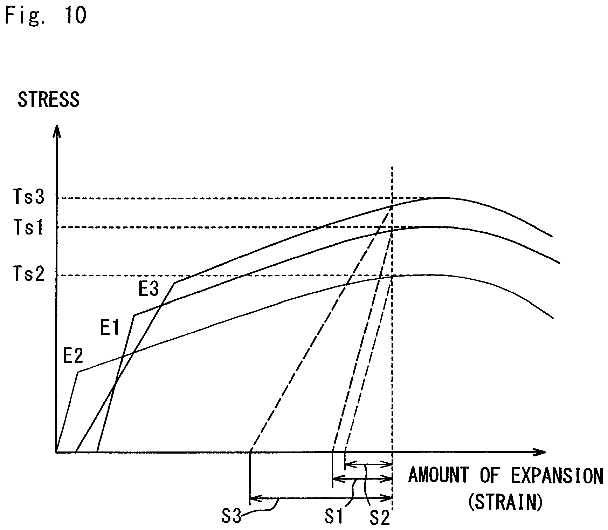

Fig. 10 is a stress-strain graph representing spring back amounts S1, S2, and S3. A horizontal axis indicates the amount of expansion (strain), and a vertical axis indicates stress. The spring back amount S1 indicates the spring back amount of the first tube 10, the spring back amount S2 indicates the spring back amount of the second tube 20, and the spring back amount S3 indicates the spring back amount of the third tube 30. As represented by slopes of left straight portions in the graph, Young's modulus E1 of the first tube 10 is substantially the same as Young's modulus E2 of the second tube 20, and Young's modulus E3 of the third tube 30 is smaller than the Young's modulus E1 of the first tube 10 and the Young's modulus E2 of the second tube 20. In terms of the tensile strength, a tensile strength Ts3 of the third tube 30 is the largest, a tensile strength Ts1 of the first tube 10 is the second largest, and a tensile strength Ts2 of the second tube 20 is the smallest. In particular, a difference between the spring back amount S1 and the spring back amount S2 in the present embodiment is mainly caused by a difference in Young's modulus and a difference in tensile strength. In this regard, the spring back amount S3 of the third tube 30 is the largest, the spring back amount S1 of the first tube 10 is the second largest, and the spring back amount S2 of the second tube 20 is the smallest. Accordingly, the third tube 30 strongly tightens the first and second tubes 10 and 20, and the first tube 10 strongly tightens the second tube 20. As a result, the joining strength of the press-fitting is further improved. The spring back is schematically represented up to a position at which the stress becomes zero by a broken line in the graph. However, the stress generated between the first tube 10, the second tube 20, and the third tube 30 is in an equilibrium state, and thus, the contraction is completed in reality.

According to the present embodiment, the three tubes 10 to 30 can be simultaneously joined by press-fitting with high strength. Specifically, since the third tube 30, the first tube 10, and the second tube 20 are made of a material having a large spring back amount, these members are arranged from the outside toward the inside in order from the member made of the material having the large spring back amount. Accordingly, since the spring back amount of the outer third tube 30 is the largest, the third tube 30 strongly tightens the first tube 10 and the second tube 20. Since the spring back amount of the intermediate first tube 10 is larger than that of the inner second tube 20, the first tube 10 strongly tightens the second tube 20. Therefore, the three tubes 10 to 30 are joined by press-fitting through firm tightening, and high-strength joining by press-fitting is realized.

As mentioned above, although the specific embodiment and modification examples of the present invention have been described, the present invention is not limited to the above-mentioned forms, and can be variously changed and implemented within the scope of the present invention. For example, an appropriate combination of the contents of the individual embodiments may be used as an embodiment of the present invention. The expansion processing is not limited to the processing using the rubber member 40, and may be performed through electromagnetic forming, machining, and hydroforming. Although it has been described in the embodiments that the steering support beam 1 is an example of an application target of the method for joining members, the application target is not limited thereto. For example, the method for joining members can be applied to a vehicle body frame such as a roof side rail, a seat frame, or a radiator support beam.

### DESCRIPTION OF SYMBOLS

- 1: Steering support beam (joined body)
- 2: Bracket
- 10: First tube
- 20: Second tube
- 30: Third tube
- 40: Rubber member (elastic body)
- 50: Pusher
- 51: Indenter portion
- 52: Drive rod

## Claims

1. A method for joining members comprising:
preparing a first tube and a second tube capable of being inserted to a tube hole of the first tube in an axial direction of the first tube;
inserting the second tube into the first tube; and
radially expanding the second tube toward the first tube, thereby joining the first tube and the second tube by press-fitting,
wherein the first tube is made of a material having a spring back amount larger than a spring back amount of the second tube.

2. The method for joining members according to claim 1, wherein
the expanding includes
inserting an elastic body into the second tube, and
radially expanding the elastic body outward of the second tube by compressing the elastic body in a longitudinal direction of the second tube, thereby expanding the second tube toward the first tube.

3. The method for joining members according to claim 1 or 2, wherein a tensile strength of a material of the first tube is equal to or greater than a tensile strength of a material of the second tube.

4. The method for joining members according to claim 1 or 2, wherein Young's modulus of a material of the first tube is equal to or less than Young' s modulus of a material of the second tube.

5. The method for joining members according to claim 1 or 2, further comprising:
preparing a third tube that allows insertion of the first tube;
inserting the first tube and the second tube into the third tube; and
expanding the second tube toward the first tube and the third tube, thereby joining the first tube, the second tube, and the third tube by press-fitting,
wherein the third tube, the first tube, and the second tube are made of materials having larger spring back amounts in this order.

6. A joined body in which a second tube is expanded to be joined to a first tube in a state in which the second tube is inserted into a tube hole of the first tube in an axial direction of the first tube,
wherein the first tube is made of a material having a spring back amount larger than a spring back amount of the second tube.
